# EUROPEAN PATENT SPECIFICATION

(11) **EP 2 179 907 B1**
(45) Date of publication and mention of the grant of the patent: **20.07.2011**
(21) Application number: 08167653.8
(22) Date of filing: 27.10.2008
(51) Int. Cl.: B62B 3/16, A45C 3/04, A45C 5/14

(54) **Tow assembly for shopping and converting set for converting a shopping basket into such a tow assembly.**
Zuganordnung zum Einkaufen und Umwandlungssatz zum Umwandeln eines Einkaufskorbs in solch eine Zuganordnung
Ensemble de remorquage pour les courses et jeu de conversion pour la conversion d'un panier de courses en un tel ensemble de remorquage

(43) Date of publication of application: 28.04.2010
(73) Proprietor: Black Sheep Retail Products B.V., 6744 PP Ederveen (NL)
(72) Inventor: van Groeningen, Christiaan Elise Henricus A. M., 1251 EA Laren (NL); de Rooij, Michiel Maria Antonius, 1704 VP Heerhugowaard (NL)
(74) Representative: Vermeulen, Martijn

(56) References cited:
- EP-A- 1 407 956
- EP-A- 1 762 498
- WO-A-2008/152581
- US-B1- 7 275 758

## Description

The present invention relates to a tow assembly for shopping according to the preamble of claim 1. Such a towing assembly is known from EP 1762498 A1.

The object of the present invention is to provide an improved tow assembly. This object is achieved by providing a tow assembly for shopping according to claim 1. This allows a conventional prior art basket having a U-shaped upper edge to be used for obtaining a tow assembly according to the invention.

A wheel lying entirely within the contour of the bottom means that, viewed in any direction parallel to the bottom, the wheel does not project beyond the outer boundary of the bottom. The outer boundary of the bottom is in fact the outer edge of the bottom, which coincides with the lower edge of the longitudinal and transverse walls. By providing a wheel in each corner and each wheel within the contour of the bottom, a stable running of the tow assembly over the floor and along obstructions is obtained. The four outer edges of the rectangular bottom serve as guiding edge for the basket when the basket contacts an obstruction, like the shoe of another shopping person or the support feet of a display rack in a shop. The guiding edges shield the wheels against such objects and prevent the wheels, and thus the tow assembly, from being caught behind the obstruction. Wheels in each corner ensure that at least two wheels contact the floor in case contact with an obstruction might cause a wheel being lifted from the ground. Additionally the arrangement of the wheels allows a multiple of such tow assemblies being stored as a pile of nested baskets.

In order to maximize the length of the tow bar for a basket with predetermined dimensions, the second end of the tow bar carries a hinge, which is attached to the upper edge of the first transverse wall. In this embodiment, the hinge axis extends outside the basket along the upper edge of the first transverse wall, whilst, in the rest position, the grip bar extends outside the basket along the upper edge of the second transverse wall. The hinge does not hinder a person carrying the basket with the carrying brace.

In order to prevent the tow member from swinging downwards from the horizontal rest position, the tow member is provided with a stop lip, which, in the rest position rests, on the upper edge of a said longitudinal or transverse wall and extends from the tow member in the direction of the basket. As the stop lip does not extend in outward direction with respect to the basket, it is prevented from scratching people or surrounding objects.

The tow member is an essentially U-shaped bracket having two of said tow bars connected by said grip bar, and wherein the dimensions and shape of the inner contour of the U-shaped bracket essentially correspond to the dimensions and shape of the outer contour defined by the upper edges of the second transverse wall and the two longitudinal walls such that in the rest position the upper edges of the second transverse wall and the two longitudinal walls are enclosed by the U-shaped bracket. The U-shaped bracket provides an easy gripping of the tow member from all sides and the corresponding shape and dimensions minimize the space occupied by the tow member when in the rest position.

According to an embodiment, the distance from the grip bar to said floor is at least 72 cm and at most 80 cm, preferably about 76 cm, when the basket is placed on a horizontal floor and the tow member is in a vertical position. From an ergonomical view, this gripping height of 72 cm to 80 cm is convenient for people having a length up to about 183 cm. A gripping height of about 76 cm, is still comfortable for people having a length up to about 177 cm and can also be managed by people having a length of about 190 cm. Taking into account that the average length of man in Northern Europe is about 185 cm, that the most frequent users of such tow assemblies will be women, and that the length of most woman is smaller than 177 cm, a gripping height of at least about 76 cm is preferred. It is noted that relatively smaller people will not have problems with a (too) high - vertical - gripping height as they will, when using it, automatically place the tow member in a slanting position which is convenient for their length. Taking into account that the average length of people decreases with increasing age and that elder people are envisaged to be the main users of the assembly, said distance is at least 74 cm and preferably at most 78 cm.

Taking into account that in practice, on the one hand, the hinge axis of the hinge will lie at a distance R (for example R=14.75 mm) a little lower than the upper side of the upper edge, whilst on the other hand the wheels will increase the height of the upper edge of the basket with respect to the floor (when compared with a basket without wheels) with a distance Q (for example Q=17.50 mm), which will in practise have a value of at least R, one can also define the ergonomical gripping height as the sum of the length of the drag bar and the height of the basket. This results in a preferred embodiment, wherein the sum of the height of the basket and the length of the tow bar is at least 72 cm and at most 80 cm, such as about 76 cm, wherein the height of the basket is measured from the bottom to the upper edge of the walls, wherein it is additionally preferred when said sum is at least 74 cm and/or at most 78 cm.

With respect to the stability of the tow assembly against turning on its side, it is advantageous when the height of the basket is in the range of 45% to 55% of the length of the upper edge of a said longitudinal wall. In this respect it is additionally preferred when the length of the transverse wall is, measured at the bottom of the basket, in the range of 90% to 110% of the height of the basket. For stability against turning on its side, it is also advantageous when the track width of the wheels is in the range of 80% to 100% of the height of the basket. According to a further preferred embodiment of the invention a stable tow assembly having a good gripping height for the handgrip is obtained when the length of said upper edge is in the range of 47 cm to 51 cm, such as in the range of 48 cm to 50 cm, preferably about 49 cm.

According to a further aspect, the invention relates to a converting set for converting a shopping basket into a tow assembly according to claim 14.

With respect to further preferred embodiments of the tow member, wheels or basket, reference is made to the dependent claims directed to the tow assembly.

The present invention will be elucidated further with reference to the drawings, wherein:
Figure 1 shows a perspective view of a tow assembly according to the invention, looking inside the basket;
Figure 2 shows a perspective view of the tow assembly according to figure 1, looking onto the lowerside of the basket and showing the basket upside down;
Figure 3 shows the another tow assembly according to the invention similar to the one of figures 1 and 2, with the tow member in a tow position;
Figure 4 shows a pile of nested tow assemblies according to figures 3;
Figure 5 shows schematically that the tow assembly according to figure 3 fits to persons having a length up to at least 177 cm;
Figure 6 shows as a detail a cross section of a hinge mounted on an upper edge;
Figure 7 shows perspective view of the wheel and its mounting plates; and
Figure 8 shows a perspective view of a tow member according to the invention.

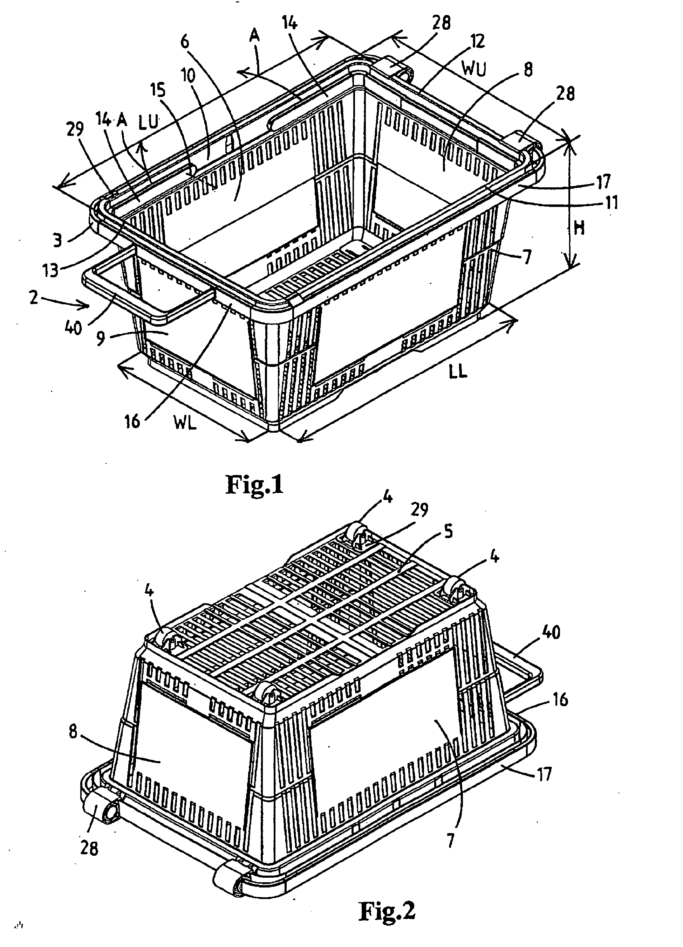

Referring to figures 1-3, the tow assembly 1 according to the invention comprises a basket 2, a tow member 3 and four wheels 4.

The basket 2 has a rectangular bottom 5, two opposing longitudinal walls 6, 7 and two opposing transverse walls 8, 9. Each wall has an upper edge 10, 11, 12, 13, respectively. These upper edges 10, 11, 12, 13 have a U-shaped cross section with the opening of the U facing downwards. The basket further has two U-shaped carrying braces 14, which can swing, from the position shown in figures 1-3, around swing axis 15 according to arrow A to a position about vertically with respect to the bottom. This allows a person to carry the basket by hand. This basket - without tow member and wheels - is as such prior art and in use in supermarkets of Applicant. The dimensions of this basket are - see figure 2 -: height H about 26 cm; length LU, measured along the upper edge, about 49 cm; length LL, measured along the bottom, about 38 cm; width WU, measured along the upper edge, about 34 cm; and width WL, measured along the bottom, about 24 cm.

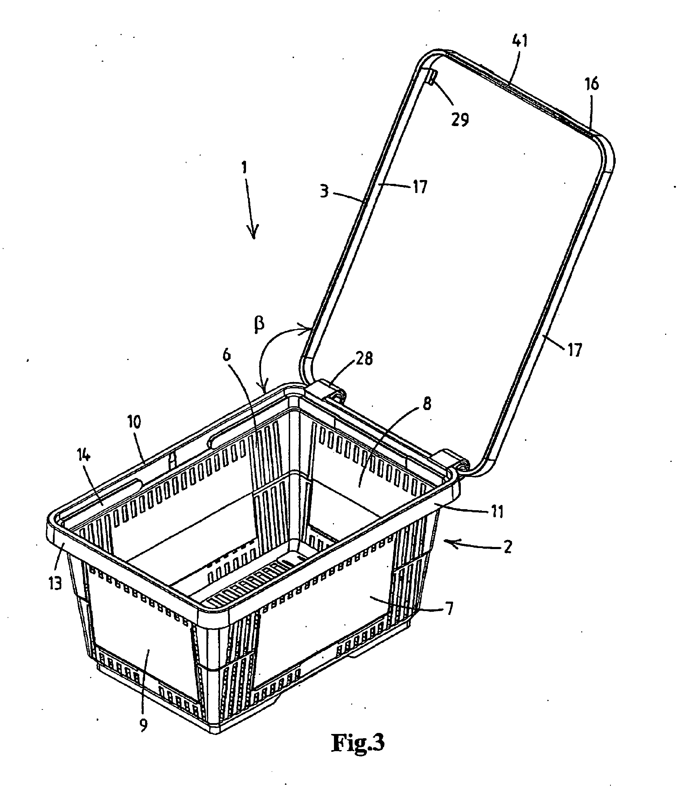

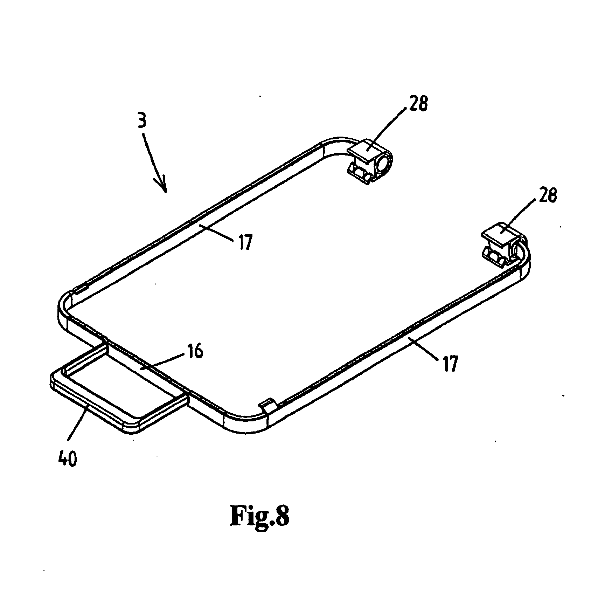

The tow member 3 is, see also figure 8, an essentially U-shaped bracket comprising a grip bar 16 and two parallel tow bars 17. The grip bar 16 connects the first ends of the tow bars 17. The other ends of the tow bars 17 carry a hinge 28. The other ends are bent at angles of about 90°, which bent parts form shafts 18 received in cylindrical apertures 20 of a hinge part 19. In the embodiment according to figures 1, 2 and 8, the grip bar 16 is provided with handgrip 40 in the form of an additional brace. In the embodiment according to figures 3, 4 and 5, the handgrip 41 is just a part of the grip bar. In case the gripping bar 16 lies, in vertical position, sufficiently high above the ground for comfortable use by the intended vertical position, the gripping bar is not sufficiently high above the floor to serve as a handgrip, the additional brace 40 according to figures 1, 2 and 8 is advantageous.

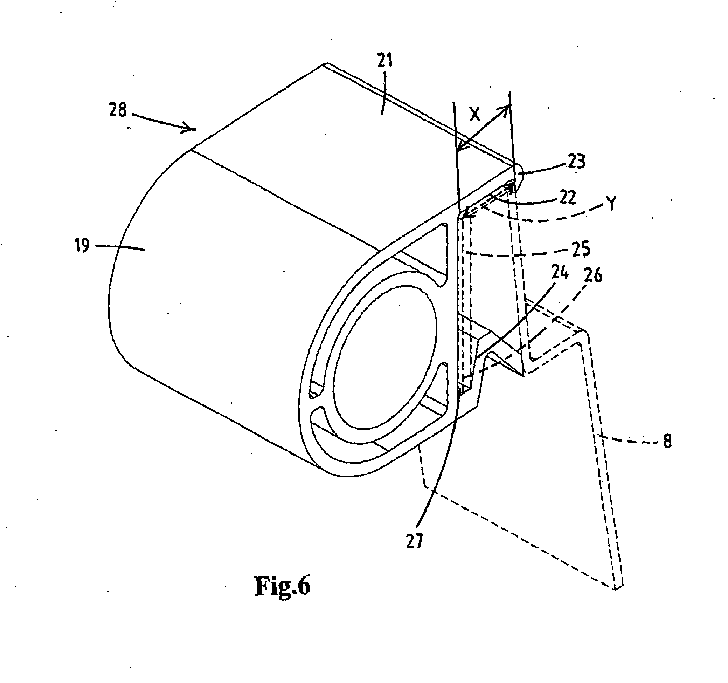

Referring also to figure 6 for details of the hinges 28, the hinge parts 19 are provided with a mounting arm 21 at the upper sides. The length X of the mounting arms is equal to the width Y of the upper face 22 of the upper edge 12 of the first transverse wall 8. The mounting arm 21 is at its free end provided with a downwardly facing ridge 23. Referring to figures 2 and 3 the ridge 23 catches behind the upper face 22 on the inside of the basket to provide a locking engagement. On the lower side of the hinge part 19, there is provided a snap lip 24 for snapping engagement of the lower end of the outer leg 25 of the U-shaped upper edge 12. The lower end 26 of the outer leg 25 is accommodated in a slit 27 defined between the snap lip 24 and the body of the hinge part 19. The construction of the hinge 28 allows for easy mounting of the tow member 3 to baskets 2 having a U-shaped upper edge. In this manner the tow member can easily be mounted on a prior art basket in order to convert it into a tow assembly according to the invention.

The tow member 3 further comprises two stop lips 29, which rest on the upper edges 10, 11 of longitudinal walls 6, 7 when the tow member 3 is in a horizontal position, called the rest position, see figure 2. In this horizontal, rest position, the tow member extends in a plane defined by the upper edges 10, 11, 12 and 13 and lies completely outside the basket 2. As one can see in figure 2, the dimensions and shape of the inner contour of the U-shaped bracket 3 corresponds essentially with the dimensions and shape of the outer contour defined by the upper edges 11, 13, 10 of the longitudinal wall 7, the second transverse wall 9 and the longitudinal wall 6. The U-shaped bracket encloses so to say the upper edges 11, 13 and 10. The length of the tow bars 17 is preferably fixed, i.e. these lengths cannot be elongated or shortened.

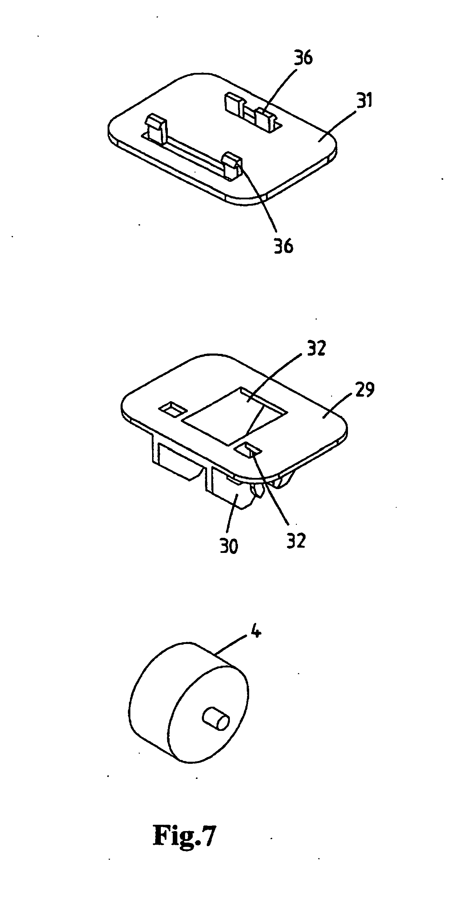

Referring for details also to figure 7, each wheel 4 is attached to the basket 2 by a first mounting plate 29 with carrying arms 30 carrying the wheel 4 and a second mounting plate 31, which is shown upside down in figure 7. The first mounting plate 29 is provided outside the basket 2 against the bottom 5. The second mounting plate 31 is provided inside the basket 2 on the bottom 5 opposite the first mounting plate 29. One of said mounting plates, in the figures the second mounting plate 32, is provided with locking arms 36 extending through apertures in the bottom 5 and engaging in locking apertures 32 formed in the other 32 of said mounting plates.

The tow member can swing to and fro between the horizontal rest position shown in figure 2 and a towing position shown in figure 3. The angle β of the swing is larger than 90°. In order to limit the swing in the towing position a stop can be provided in the hinge 28. It is also possible to design the hinge 28 such that the shaft 18 is received in the aperture 20 with friction in order to allow the tow member 3 to stay in a position also when not supported in the hand of the user. The smaller the user is, the larger the angle β will be.

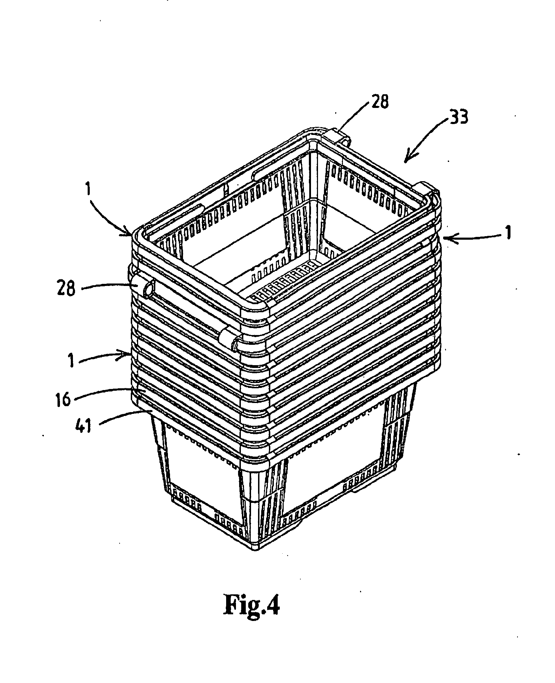

Figure 4 shows that a multiplicity of tow assemblies 1 according to the invention can be stacked as a nested pile 33. Such a nested pile requires a minimum of space for storage. Due to the wheels being arranged completely inside the horizontal contour of the bottom 5, the nesting depth is as large as possible and consequently the height of the pile is reduced to a minimum.

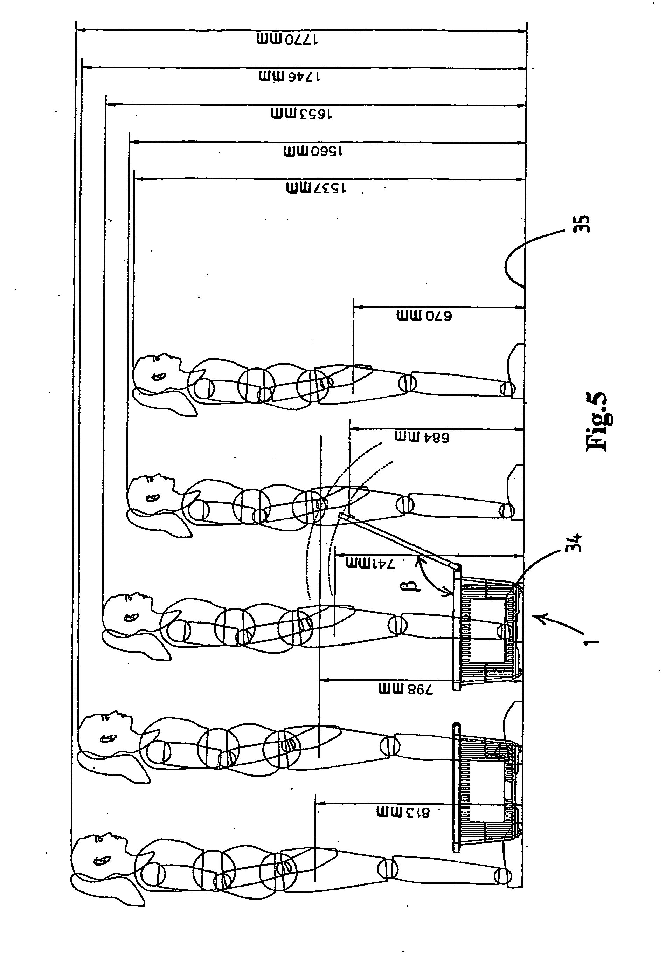

Figure 5 shows schematically that the tow assembly according to figures 1-4 fits to persons having a length up to at least 177 cm. In case of shorter persons, the angle β will become larger. In case the person might be longer than 174 cm, the person might need to bend his back a little or might lift the first end 34 a little from the floor 35.

The invention has been elucidated with reference to the drawings. It will however be clear that further embodiments within the scope of the invention are possible. For example more than four wheel could be provided, the tow bars 17 could be made telescopically so that the length can be adjusted, the tow member 3 could be L-shaped (i.e. leaving away one of the two tow bars 17), etcetera. The scope of this invention will be determined by the scope of the claims as granted on this application.

## Claims

1. Tow assembly (1) for shopping, comprising:
• a basket (2) defined by a rectangular bottom (5), two opposing longitudinal walls (6, 7), a first transverse wall (8) at a first transverse end of the basket (2), and a second transverse wall (9) at a second transverse end of the basket (2), at least the upper edge (12) of the first transverse wall (8) being in cross-section U shaped, wherein the opening of said U shaped upper edge lies at the outside of the basket (2) and faces downwards;
• wheels (4), each wheel, viewed perpendicular to the upperside of the bottom (5) of the basket (2), being provided at the underside of the bottom and lying entirely within the contour of the bottom at a corner of the bottom;
• a tow member (3) with a grip bar (16) having a handgrip (40, 41) to be gripped by a hand of a person towing the tow assembly;
wherein the tow member (3) comprises at least one tow bar (17) having a first end carrying the grip bar (16) and a second end, which, at the first transverse end of the basket (2), is attached to the upper edge (12) of one of said walls (8) by a hinge (28);
wherein the tow member (3) is swingable between a rest position and a towing position;
wherein, in the rest position, the tow member (3) extends in a plane defined by the upper edges (10, 11, 12, 13) of the longitudinal and transverse walls (6, 7, 8, 9) and lies completely outside the basket (2) with the grip bar (16) along the outside of the upper edge (16) of the second transverse wall (9);
wherein the angular distance of the tow bar (3) between the towing position and rest position is at least 90°; and
wherein the assembly further comprises at least one carrying brace (14) mounted to the upper edges (10, 11, 12, 13) of the longitudinal side walls (6, 7, 8, 9) for carrying the basket (2) by hand,
**characterized in that** the hinge (28) is mounted against the outside of the outer leg (25) of the U shaped upper edge (12) of the first transverse wall (8) to provide a locking engagement of the ridge (23) catching behind the upper edge (12) on the inside of the basket (2), wherein a snap lip (24) is provided on the lower side of the hinge for snapping engagement with the outer leg (25) of the U shaped upper edge (12),
and **in that** each wheel (4) is attached to the basket (2) by a first mounting plate (29) and a second mounting plate (31), wherein the first mounting plate (29) is provided outside the basket (2) against the bottom (5) of the basket (2), wherein the second mounting plate (31) is provided inside the basket (2) on the bottom (5) opposite the first mounting plate (29), and wherein one of said mounting plates (29, 31) is provided with locking arms (36) extending through apertures in the bottom (5) and engaging in locking apertures (32) formed in the other of said mounting plates (31, 29).

2. Tow assembly (1) according to claim 1, wherein the snap lip (24) of the hinge (28) snaps around the lower end (27) of the outer leg (25) of the U shaped upper edge (12).

3. Tow assembly (1) according to one of the preceding claims, wherein the tow member (3) is provided with a stop lip (29), which, in the rest position rests, on the upper edge (10, 11) of a said longitudinal or transverse wall and extends from the tow member (3) in the direction of the basket (2).

4. Tow assembly (1) according to one of the preceding claims, wherein the tow member (3) is an essentially U-shaped bracket having two of said tow bars (17) connected by said grip bar (16), and wherein the dimensions and shape of the inner contour of the U-shaped bracket essentially correspond to the dimensions and shape of the outer contour defined by the upper edges (10, 11,13) of the second transverse wall (9) and the two longitudinal walls (6, 7) such that in the rest position the upper edges (10, 11, 13) of the second transverse wall (9) and the two longitudinal walls (6, 7) are enclosed by the U-shaped bracket.

5. Tow assembly (1) according to one of the preceding claims, wherein, when the basket (2) is placed on a horizontal floor (35) and the tow member (3) is in a vertical position, the distance from the handgrip (40, 41) to said floor is at least 72 cm and at most 80 cm, such as at least about 76 cm.

6. Tow assembly (1) according to claim 5, wherein said distance is at least 74 cm.

7. Tow assembly (1) according to claim 5 or 6, wherein said distance is at most 78 cm.

8. Tow assembly (1) according to one of the preceding claims, wherein the height (H) of the basket (2) is in the range of 45% to 55% of the length (LU) of the upper edge (10, 11) of a said longitudinal wall (6, 7).

9. Tow assembly (1) according to claim 8, wherein the length (WL) of the transverse wall (8, 9) is, measured at the bottom (5) of the basket, in the range of 90% to 110% of the height (H) of the basket (2).

10. Tow assembly (1) according to claim 8 or 9, wherein the track width of the wheels (4) is in the range of 80% to 100% of the height (H) of the basket (2).

11. Tow assembly (1) according to one of claims 8-10, wherein the length (LU) of said upper edge (10, 11) of a said longitudinal wall (6, 7) is in the range of 47 cm to 51 cm, such as in the range of 48 cm to 50 cm, preferably about 49 cm.

12. Tow assembly (1) according to one of the preceding claims,
wherein the length (X) of the mounting arm (21) is equal to the width (Y) of the upper face of said upper edge (12) of the first transverse wall (8).

13. Tow assembly (1) according to one of the preceding claims,
wherein the first mounting plate (29) comprises carrying arms (30) carrying a said wheel (4).

14. Converting set (3, 4) for converting a basket (2) into a tow assembly according to one of the preceding claims,
wherein the basket (2) is defined by a bottom (5), two opposing longitudinal walls (6, 7) and two opposing transverse walls (8, 9), wherein at least the upper edge (12) of a first transverse wall (8) in cross section is U shaped and the opening of said U shaped upper edge lies at the outside of the basket (2) and faces downwards, and wherein the basket (2) comprises at least one carrying brace (14) mounted to the upper edges (10, 11) of the longitudinal side walls (6, 7) for carrying the basket (2) by hand;
wherein the converting set comprises
• at least two, preferably four, wheels (4) adapted to be provided at the underside of the bottom (5) of the basket (2) and below the bottom (5) of the basket (2), wherein each wheel (4) is attachable to the basket (2) by a first mounting plate (29) and a second mounting plate (31), wherein the first mounting plate (29) is providable outside the basket (2) against the bottom (5) of the basket (2), wherein the second mounting plate (31) is providable inside the basket (2) on the bottom (5) opposite the first mounting plate (29), and wherein one of said mounting plates (29, 31) is provided with locking arms (36) extendable through apertures in the bottom (5) and engagable in locking apertures (32) formed in the other of said mounting plates (31, 29);
• a tow member (3) having at a first end a grip bar (16) having a handgrip (40, 41) to be gripped by a hand of a person towing the tow assembly and carrying at a second end a hinge (28) adapted for attachment to the upper edge (12) of the first transverse wall of the basket (2), wherein the hinge (28) has at its upper side a mounting arm (21) having a downwardly facing ridge (23) for providing a locking engagement of the ridge (23) catching behind the upper edge (12) on the inside of the basket (2), wherein a snap lip (24) is provided on the lower side of the hinge for snapping engagement with the outer leg (25) of the U shaped upper edge (12).

15. Converting set (3, 4) according to claim 14, having a tow member (3) according to one of the claims 2 - 7 and/or wheels (4) according to claim 10 or 13.

## Patentansprüche

1. Ziehanordnung (1) zum Einkaufen, die umfasst:
einen Korb (2), der durch einen rechteckigen Boden (5), zwei einander gegenüberliegende Längswände (6, 7), eine erste Querwand (8) an einem ersten Querende des Korbes (2) sowie eine zweite Querwand (9) an einem zweiten Querende des Korbes (2) gebildet wird, wobei wenigstens der obere Rand (12) der ersten Querwand (8) im Querschnitt U-förmig ist, die Öffnung des U-förmigen oberen Randes an der Außenseite des Korbes (2) liegt und nach unten gerichtet ist;
Räder (4), wobei jedes Rad, senkrecht zur Oberseite des Bodens (5) des Korbes (2) gesehen, an der Unterseite des Bodens vorhanden ist und vollständig innerhalb des Umrisses des Bodens an einer Ecke des Bodens vorhanden ist;
ein Ziehelement (3) mit einer Griffstange (16), die einen Handgriff (40, 41) zum Ergreifen mittels einer Hand einer Person aufweist, die die Ziehanordnung zieht;
wobei das Ziehelement (3) wenigstens eine Ziehstange (17) umfasst, die ein erstes Ende, das die Greifstange (16) trägt, und ein zweites Ende hat, das am ersten Querende des Korbes (2) am oberen Rand (12) einer der Wände (8) über ein Scharnier (28) angebracht ist;
wobei das Ziehelement (3) zwischen einer Ruheposition und einer Ziehposition geschwenkt werden kann;
sich das Ziehelement (3) in der Ruheposition in einer Ebene erstreckt, die durch die oberen Ränder (10, 11, 12, 13) der Längs- und der Querwände (6, 7, 8, 9) gebildet wird, und
es vollständig außerhalb des Korbes (2) liegt, wobei sich die Greifstange (16) an der Außenseite des oberen Randes (16) der zweiten Querwand (9) befindet;
der Winkelabstand der Ziehstange (3) zwischen der Ziehposition und der Ruheposition wenigstens 90° beträgt; und
die Anordnung des Weiteren wenigstens einen Tragebügel (14) umfasst, der an den oberen Rändern (10, 11, 12, 13) der Längsseitenwände (6, 7, 8, 9) zum Tragen des Korbes (2) von Hand angebracht ist,
**dadurch gekennzeichnet, dass** das Scharnier (28) an der Außenseite des äußeren Schenkels (24) des U-förmigen oberen Randes (12) der ersten Querwand (8) angebracht ist, um einen arretierenden Eingriff der Wulst (23) zu bewirken, die hinter dem oberen Rand (12) an der Innenseite des Korbes (2) einrastet, wobei ein Einschnappfalz (24) an der Unterseite des Scharniers für einschnappenden Eingriff mit dem äußeren Schenkel (25) des U-förmigen oberen Randes (12) vorhanden ist,
und dass jedes Rad (4) über eine erste Anbringungsplatte (29) und eine zweite Anbringungsplatte (31) an dem Korb (2) angebracht ist, wobei die erste Anbringungsplatte (29) außerhalb des Korbes (2) am Boden (5) des Korbes (2) vorhanden ist und die zweite Anbringungsplatte (31) im Inneren des Korbes (2) an dem Boden (5) der ersten Anbringungsplatte (29) gegenüberliegend vorhanden ist und eine der Anbringungsplatten (29, 31) mit Arretierarmen (36) versehen ist, die sich durch Öffnungen in dem Boden (5) hindurch erstrecken und in Arretieröffnungen (32) eingreifen, die in der anderen der Anbringungsplatten (31, 29) ausgebildet sind.

2. Ziehanordnung (1) nach Anspruch 1, wobei der Einschnappfalz (24) des Scharniers (28) um das untere Ende (27) des äußeren Schenkels (25) des U-förmigen oberen Randes (12) herum einschnappt.

3. Ziehanordnung (1) nach einem der vorangehenden Ansprüche, wobei das Ziehelement (3) mit einem Anschlagfalz (29) versehen ist, der in der Ruheposition auf dem oberen Rand (10, 11) der Längs- oder Querwand aufliegt und sich von dem Ziehelement (3) in der Richtung des Korbes (2) erstreckt.

4. Ziehanordnung (1) nach einem der vorangehenden Ansprüche, wobei das Ziehelement (3) ein im Wesentlichen U-förmiger Bügel ist, der zwei der Ziehstangen (17) aufweist, die über die Greifstange (16) verbunden sind, und die Abmessungen sowie die Form der Innenkontur des U-förmigen Bügels im Wesentlichen den Abmessungen und der Form des äußeren Umrisses entsprechen, der durch die oberen Ränder (10, 11, 13) der zweiten Querwand (9) und der zwei Längswände (6, 7) so gebildet wird, dass in der Ruheposition die oberen Ränder (10, 11, 13) der zweiten Querwand (9) und der zwei Längswände (6, 7) von dem U-förmigen Bügel umschlossen sind.

5. Ziehanordnung (1) nach einem der vorangehenden Ansprüche, wobei, wenn der Korb (2) auf einen horizontalen Boden (35) platziert wird und sich das Ziehelement (3) in einer vertikalen Position befindet, der Abstand von dem Handgriff (40, 41) zu dem Boden wenigstens 72 cm und höchstens 80 cm, so beispielsweise wenigstens ungefähr 76 cm, beträgt.

6. Ziehanordnung (1) nach Anspruch 5, wobei der Abstand wenigstens 74 cm beträgt.

7. Ziehanordnung (1) nach Anspruch 5 oder 6, wobei der Abstand höchstens 78 cm beträgt.

8. Ziehanordnung (1) nach einem der vorangehenden Ansprüche, wobei die Höhe (H) des Korbes (2) im Bereich von 45 % bis 55 % der Länge (LU) des oberen Randes (10, 11) der Längswand (6, 7) liegt.

9. Ziehanordnung (1) nach Anspruch 8, wobei die Länge (WL) der Querwand (8, 9), gemessen am Boden (5) des Korbes, in dem Bereich von 90 % bis 110 % der Höhe (H) des Korbes (2) liegt.

10. Ziehanordnung (1) nach Anspruch 8 oder 9, wobei die Spurbreite der Räder (4) im Bereich von 80 % bis 100 % der Höhe (H) des Korbes (2) liegt.

11. Ziehanordnung (1) nach einem der Ansprüche 8-10, wobei die Länge (LU) des oberen Randes (15) der Längswand (6, 7) in dem Bereich von 47 cm bis 51 cm, beispielsweise im Bereich von 48 cm bis 50 cm, vorzugsweise ungefähr 49 cm, liegt.

12. Ziehanordnung (1) nach einem der vorangehenden Ansprüche,
wobei die Länge (X) des Anbringungsarms (21) der Breite (Y) der oberen Fläche des oberen Randes (12) der ersten Querwand (8) gleich ist.

13. Ziehanordnung (1) nach einem der vorangehenden Ansprüche,
wobei die erste Anbringungsplatte (29) Tragearme (30) umfasst, die das Rad (4) tragen.

14. Umrüstsatz (3, 4) zum Umrüsten eines Korbes (2) zu einer Ziehanordnung nach einem der vorangehenden Ansprüche,
wobei der Korb (2) durch einen Boden (5), zwei einander gegenüberliegende Längswände (6, 7) und zwei einander gegenüberliegende Querwände (8, 9) gebildet wird, wenigstens der obere Rand (12) einer ersten Querwand (8) im Querschnitt U-förmig ist und die Öffnung des U-förmigen oberen Randes an der Außenseite des Korbes (2) liegt und nach unten gerichtet ist, und der Korb (2) wenigstens einen Tragebügel (14) umfasst, der an den oberen Rändern (19) der Längsseitenwände (20) zum Tragen des Korbes (2) von Hand angebracht ist;
wobei der Umrüstsatz umfasst:
• wenigstens zwei, vorzugsweise vier, Räder (4), die so eingerichtet sind, dass sie an der Unterseite des Bodens (5) des Korbes (2) und unterhalb des Bodens (5) des Korbes (2) vorhanden sind, wobei jedes Rad (4) über eine erste Anbringungsplatte (29) und eine zweite Anbringungsplatte (31) an dem Korb (2) angebracht werden kann, die erste Anbringungsplatte (29) außerhalb des Korbes (2) an dem Boden (5) des Korbes (2) vorhanden sein kann, die zweite Anbringungsplatte (31) der ersten Anbringungsplatte (29) gegenüberliegend im Inneren des Korbes (2) an dem Boden (5) vorhanden sein kann und eine der Anbringungsplatten (29, 31) mit Arretierarmen (36) versehen ist, die sich durch Öffnungen in dem Boden (5) hindurch erstrecken können und mit Arretieröffnungen (32) in Eingriff gebracht werden können, die in der anderen der Anbringungsplatten (31, 29) ausgebildet sind;
• ein Ziehelement (3), das an einem ersten Ende eine Ziehstange (16) mit einem Handgriff (40, 41) hat, der von einer Hand einer Person ergriffen werden kann, die die Ziehanordnung zieht, und an einem zweiten Ende ein Scharnier (18) trägt, das zur Anbringung an dem oberen Rand (12) der ersten Querwand des Korbes (2) eingerichtet ist, wobei das Scharnier (28) an seiner Oberseite einen Anbringungsarm (21) aufweist, der einen nach unten gerichteten Vorsprung (23) zum Schaffen eines Arretiereingriffs des Vorsprungs (23) aufweist, der hinter dem oberen Rand (12) an der Innenseite des Korbes (2) einrastet, wobei ein Einschnappfalz (24) an der Unterseite des Scharniers zum einschnappenden Eingriff mit dem äußeren Schenkel (25) des U-förmigen oberen Randes (12) vorhanden ist.

15. Umrüstsatz (3, 4) nach Anspruch 14, der ein Ziehelement (3) nach einem der Ansprüche 2-7 und/oder Räder (4) nach Anspruch 10 oder 13 aufweist.

## Revendications

1. Ensemble de remorquage (1) pour les courses, comprenant :
• un panier (2) défini par un fond rectangulaire (5), deux parois longitudinales opposées (6, 7), une première paroi transversale (8) au niveau d'une première extrémité transversale du panier (2) et une seconde paroi transversale (9) au niveau d'une seconde extrémité transversale du panier (2), au moins le bord supérieur (12) de la première paroi transversale (8) ayant une section transversale en forme de U, dans lequel l'ouverture dudit bord supérieur ayant une forme de U repose à l'extérieur du panier (2) et est tourné vers le bas ;
• des roues (4), chaque roue, vue perpendiculairement par rapport au côté supérieur du fond (5) du panier (2), étant disposée au niveau du côté inférieur du fond et reposant entièrement à l'intérieur du contour du fond au niveau d'un coin du fond ;
• un élément de remorquage (3) avec une barre de saisie (16) ayant une poignée (40, 41) destinée à être saisie par une main d'une personne remorquant l'ensemble de remorquage ;
dans lequel l'élément de remorquage (3) comprend au moins une barre de remorquage (17) ayant une première extrémité supportant la barre de saisie (16) et une seconde extrémité qui, au niveau de la première extrémité transversale du panier (2), est attachée au bord supérieur (12) de l'une desdites parois (8) par une articulation (28) ;
dans lequel l'élément de remorquage (3) peut osciller entre une position de repos et une position de remorquage ;
dans lequel, dans la position de repos, l'élément de remorquage (3) s'étend dans un plan défini par les bords supérieurs (10, 11, 12, 13) des parois longitudinales et transversales (6, 7, 8, 9) et repose complètement à l'extérieur du panier (2) avec la barre de saisie (16) le long de l'extérieur du bord supérieur (16) de la seconde paroi transversale (9) ;
dans lequel la distance angulaire de la barre de remorquage (3) entre la position de remorquage et la position de repos est d'au moins 90° ; et
dans lequel l'ensemble comprend en outre au moins une bride de portage (14) montée sur les bords supérieurs (10, 11, 12, 13) des parois latérales longitudinales (6, 7, 8, 9) pour porter le panier (2) par la main,
**caractérisé en ce que** l'articulation (28) est montée contre l'extérieur de la patte extérieure (25) du bord supérieur (12) en forme de U de la première paroi transversale (8) pour fournir un engagement de verrouillage de la saillie (23) s'accrochant derrière le bord supérieur (12) sur l'intérieur du panier (2), dans lequel une lèvre d'encliquetage (24) est disposée sur le côté inférieur de l'articulation pour un engagement par encliquetage avec la patte extérieure (25) du bord supérieur (12) en forme de U,
et **en ce que** chaque roue (4) est attachée au panier (2) par une première plaque de montage (29) et une seconde plaque de montage (31), dans lequel la première plaque de montage (29) est disposée à l'extérieur du panier (2) contre le fond (5) du panier (2), dans lequel la seconde plaque de montage (31) est disposée à l'intérieur du panier (2) sur le fond (5) opposé à la première plaque de montage (29), et dans lequel une desdites plaques de montage (29, 31) est équipée de leviers de verrouillage (36) s'étendant à travers des ouvertures dans le fond (5) et s'engageant dans des ouvertures de verrouillage (32) formées dans l'autre desdites plaques de montage (31, 29).

2. Ensemble de remorquage (1) selon la revendication 1, dans lequel la lèvre d'encliquetage (24) de l'articulation (28) s'encliquète autour de l'extrémité inférieure (27) de la patte extérieure (25) du bord supérieur (12) en forme de U.

3. Ensemble de remorquage (1) selon l'une des revendications précédentes, dans lequel l'élément de remorquage (3) est équipé d'une lèvre d'arrêt (29) qui, dans la position de repos, repose sur le bord supérieur (10, 11) d'une dite paroi longitudinale ou transversale et s'étend depuis l'élément de remorquage (3) dans la direction du panier (2).

4. Ensemble de remorquage (1) selon l'une des revendications précédentes, dans lequel l'élément de remorquage (3) est un crochet essentiellement en forme de U ayant deux desdites barres de remorquage (17) reliées par ladite barre de saisie (16), et dans lequel les dimensions et la forme du contour intérieur du crochet en forme de U correspondent essentiellement aux dimensions et à la forme du contour extérieur défini par les bords supérieurs (10, 11, 13) de la seconde paroi transversale (9) et des deux parois longitudinales (6, 7) de sorte que, dans la position de repos, les bords supérieurs (10, 11, 13) de la seconde paroi transversale (9) et des deux parois longitudinales (6, 7) sont entourés par le crochet en forme de U.

5. Ensemble de remorquage (1) selon l'une des revendications précédentes, dans lequel, lorsque le panier (2) est placé sur un sol horizontal (35) et que l'élément de remorquage (3) est dans une position verticale, la distance entre la poignée (40, 41) et ledit sol est d'au moins 72 cm et d'au plus 80 cm, par exemple au moins environ 76 cm.

6. Ensemble de remorquage (1) selon la revendication 5, dans lequel ladite distance est d'au moins 74 cm.

7. Ensemble de remorquage (1) selon la revendication 5 ou 6, dans lequel ladite distance est d'au plus 78 cm.

8. Ensemble de remorquage (1) selon l'une des revendications précédentes, dans lequel la hauteur (H) du panier (2) est comprise dans la gamme s'étendant de 45% à 55% de la longueur (LU) du bord supérieur (10, 11) de ladite paroi longitudinale (6, 7).

9. Ensemble de remorquage (1) selon la revendication 8, dans lequel la longueur (WL) de la paroi transversale (8, 9) est, mesurée à partir du fond (5) du panier, comprise dans la gamme s'étendant de 90% à 110% de la hauteur (H) du panier (2).

10. Ensemble de remorquage (1) selon la revendication 8 ou 9, dans lequel la largeur de voie des roues (4) est comprise dans la gamme s'étendant de 80% à 100% de la hauteur (H) du panier (2).

11. Ensemble de remorquage (1) selon l'une des revendications 8 à 10, dans lequel la longueur (LU) dudit bord supérieur (10, 11) d'une dite paroi longitudinale (6, 7) est comprise dans la gamme s'étendant de 47 cm à 51 cm, par exemple dans la gamme s'étendant de 48 cm à 50 cm, de préférence environ 49 cm.

12. Ensemble de remorquage (1) selon l'une des revendications précédentes, dans lequel la longueur (X) du bras de montage (21) est égale à la largeur (Y) de la face supérieure dudit bord supérieur (12) de la première paroi transversale (8).

13. Ensemble de remorquage (1) selon l'une des revendications précédentes, dans lequel la première plaque de montage (29) comprend des bras porteur (30) supportant ladite roue (4).

14. Jeu de conversion (3, 4) pour convertir un panier (2) en un ensemble de remorquage selon l'une des revendications précédentes, dans lequel le panier (2) est défini par un fond (5), deux parois longitudinales opposées (6, 7) et deux parois transversales opposées (8, 9), dans lequel au moins le bord supérieur (12) d'une première paroi transversale (8) a une section transversale en forme de U et l'ouverture dudit bord supérieur en forme de U repose à l'extérieur du panier (2) et est tourné vers le bas, et dans lequel le panier (2) comprend au moins une bride de portage (14) montée sur les bords supérieurs (10, 11) des parois latérales longitudinales (6, 7) pour porter le panier (2) par la main ; dans lequel le jeu de conversion comprend
• au moins deux, de préférence quatre, roues (4) adaptées pour être disposées au niveau du côté inférieur du fond (5) du panier (2) et en-dessous du fond (5) du panier (2), dans lequel chaque roue (4) peut être attachée au panier (2) par une première plaque de montage (29) et une seconde plaque de montage (31), dans lequel la première plaque de montage (29) peut être disposée à l'extérieur du panier (2) contre le fond (5) du panier (2), dans lequel la seconde plaque de montage (31) peut être disposée à l'intérieur du panier (2) sur le fond (5) opposé à la première plaque de montage (29), et dans lequel une desdites plaques de montage (29, 31) est équipée de leviers de verrouillage (36) pouvant s'étendre à travers des ouvertures dans le fond (5) et pouvant s'engager dans des ouvertures de verrouillage (32) formées dans l'autre desdites plaques de montage (31, 29) ;
• un élément de remorquage (3) ayant au niveau d'une première extrémité une barre de saisie (16) ayant une poignée (40, 41) destinée à être saisie par une main d'une personne remorquant l'ensemble de remorquage et portant au niveau d'une seconde extrémité une articulation (28) adaptée pour s'attacher au bord supérieur (12) de la première paroi transversale du panier (2), dans lequel l'articulation (28) a au niveau de son côté supérieur un bras de montage (21) ayant une saillie (23) tournée vers le bas pour fournir un engagement de verrouillage de la saille (23) s'accrochant derrière le bord supérieur (12) sur l'intérieur du panier (2), dans lequel une lèvre d'encliquetage (24) est disposée sur le côté inférieur de l'articulation pour un engagement par encliquetage avec la patte extérieure (25) du bord supérieur (12) en forme de U.

15. Jeu de conversion (3, 4) selon la revendication 14, ayant un élément de remorquage (3) selon l'une des revendications 2 à 7 et/ou des roues (4) selon la revendication 10 ou 13.
